# EUROPÄISCHE PATENTSCHRIFT

(11) **EP 3 705 626 B1**
(45) Veröffentlichungstag und Bekanntmachung des Hinweises auf die Patenterteilung: **08.12.2021**
(21) Anmeldenummer: 20159676.4
(22) Anmeldetag: 27.02.2020
(51) Int. Cl.: E01C 19/22, E02F 9/16

(54) **BEDIENSTAND FÜR EINE BODENBEARBEITUNGSMASCHINE**
OPERATING PLATFORM FOR A SOIL WORKING MACHINE
POSTE DE COMMANDE POUR UNE MACHINE DE TRAITEMENT DE SOL

(30) Priorität: 04.03.2019 DE 102019105323
(43) Veröffentlichungstag der Anmeldung: 09.09.2020
(73) Patentinhaber: Hamm AG, 95643 Tirschenreuth (DE)
(72) Erfinder: Bornemann, Detlef, 95666 Leonberg (DE)
(74) Vertreter: Ruttensperger Lachnit Trossin Gomoll

(56) Entgegenhaltungen:
- DD-A1- 263 911
- DE-A1- 4 404 415
- JP-A- H08 100 443
- JP-A- 2012 250 789

## Beschreibung

Die vorliegende Erfindung betrifft einen Bedienstand für eine Bodenbearbeitungsmaschine, in welchem beispielsweise an einem selbstfahrenden Bodenverdichter eine Bedienperson Platz nehmen kann.

Um einer eine Bodenbearbeitungsmaschine bedienenden Bedienperson eine möglichst freie Sicht auf die Maschine und den durch die Maschine zu bearbeitenden Untergrund zu ermöglichen, sind an einem derartigen Bedienstand in jeweiligen Seitenwandbereichen desselben Fenster bzw. Türen vorgesehen, welche insbesondere auch bis an einen Bedienstandbodenbereich eines derartigen Bedienstandes heranreichen können. Auch können im Bedienstandbodenbereich selbst Bodenfenster vorgesehen sein, durch welche hindurch eine Bedienperson eine verbesserte Sicht in Richtung Untergrund oder, im Falle eines Bodenverdichters, in Richtung Verdichterwalzen haben kann.

Ein Bedienstand für eine Bodenbearbeitungsmaschine gemäß dem Oberbegriff des Anspruchs 1 ist aus der DD 263 911 A1 bekannt. Bei diesem bekannten Bedienstand ist an einem Bedienstandbodenbereich vor einem Fahrersitz eine Bedienkonsole mit verschiedenen zur Bedienung der Bodenbearbeitungsmaschine erforderlichen Bedieneinheiten, wie zum Beispiel Lenksäule mit Lenkrad und Fußbetätigungshebel, angeordnet. Seitlich der Bedienkonsole sind im Bedienstandbodenbereich Bodenfenster vorgesehen, welche zur Durchführung von Reinigungsarbeiten verschwenkt werden können.

Die JP 2012 250789 A offenbart einen Bedienstand für einen Hafenkran. In dem Bedienstand ist an einer von einer Frontwand mit darin vorgesehenen Frontfenstern abgewandten Seite einer Bedienkonsole an einem im Wesentlichen horizontalen Bodenbereichsabschnitt ein Sitz für eine Bedienperson angeordnet. Zwischen der Bedienkonsole und der Frontwand ist in einem bezüglich des im Wesentlichen horizontalen Bodenbereichsabschnitts angewinkelten Bodenbereichsabschnitt ein zur Innenseite des Bedienstandes verschwenkbares Bodenfenster vorgesehen.

Es ist die Aufgabe der vorliegenden Erfindung, einen Bedienstand für eine Bodenbearbeitungsmaschine, wie zum Beispiel Bodenverdichter, vorzusehen, bei welchem die Möglichkeit der Einwirkung auf in einem Bedienstandbodenbereich vorgesehene Bodenfenster besteht.

Erfindungsgemäß wird diese Aufgabe gelöst durch einen Bedienstand für eine Bodenbearbeitungsmaschine, wie zum Beispiel Bodenverdichter, gemäß Anspruch 1. Der Bedienstand umfasst einen Bedienstandbodenbereich und wenigstens ein im Bedienstandbodenbereich vorgesehenes Bodenfenster, wobei das Bodenfenster am Bedienstandbodenbereich zwischen einer Offenstellung und einer Schließstellung schwenkbar getragen ist.

Der Bedienstandbodenbereich weist einen im Wesentlichen horizontalen ersten Bodenbereichsabschnitt und wenigstens einen an den im Wesentlichen horizontalen bzw. horizontal orientierten ersten Bodenbereichsabschnitt angrenzenden und bezüglich des im Wesentlichen horizontalen ersten Bodenbereichsabschnitts angewinkelten zweiten Bodenbereichsabschnitt auf. In wenigstens einem, vorzugsweise zwei an einander entgegengesetzten Endbereichen des ersten Bodenbereichsabschnitts an diesen angrenzenden zweiten Bodenbereichsabschnitten ist wenigstens ein Bodenfenster vorgesehen. Insbesondere dann, wenn ein erfindungsgemäßer Bedienstand in Verbindung mit einer als Bodenverdichter ausgebildeten Bodenbearbeitungsmaschine zum Einsatz gelangen soll, wird damit eine Anpassung an die Umfangskontur der daran vorgesehenen Verdichterwalzen erreicht. Auch aus ergonomischen Gründen ist es vorteilhaft, derartige angewinkelte, also sich nicht im Wesentlichen horizontal erstreckende Bodenbereichsabschnitte vorzusehen, auf welchen eine Bedienperson auch ihre Füße abstellen kann.

Um einer Bedienperson die Möglichkeit zu geben, ihre Füße im Bereich eines Bodenfensters auf dem Bedienstandbodenbereich abzustellen, ohne dabei eine übermäßige Belastung eines Bodenfensters hervorzurufen, ist an wenigstens einem, vorzugsweise jedem Bodenfenster eine das Bodenfenster wenigstens teilweise, vorzugweise vollständig überbrückende Stütze vorgesehen. An einer derartigen Stütze kann auch angegriffen werden, um ein Bodenfenster zwischen seiner Schließstellung und seiner Offenstellung zu verschwenken.

Durch die schwenkbare Anbindung eines derartigen Bodenfensters an den Bedienstandbodenbereich ist die Möglichkeit gegeben, einerseits das Bodenfenster in seiner Schließstellung zu positionieren, um den Bedienstandbodenbereich abzuschließen und somit beispielsweise auch das Eindringen von Wasser oder Bodenmaterial in den Innenraum des Bedienstandes zu verhindern. Durch Verschwenken eines Bodenfensters in Richtung zu seiner Offenstellung oder in eine Zwischenstellung zwischen der Schließstellung der Offenstellung besteht auch die Möglichkeit, auf die vom Innenraum des Bedienstandes her nur schwer zugängliche Außenseite des Fensters Zugriff zu erhalten, beispielsweise um dieses zu reinigen.

Dazu ist es von besonderem Vorteil, wenn wenigstens ein, vorzugsweise jedes im Bedienstandbodenbereich vorgesehene Bodenfenster von der Schließstellung zur Offenstellung in Richtung zu einem Bedienstandinnenraum hin verschwenkbar ist. Somit kann eine im Bedienstand sich befindende Person die Außenseite des Bodenfensters bei in die Offenstellung verschwenktem Bodenfenster reinigen.

Für eine stabile Schwenkanbindung wird vorgeschlagen, dass wenigstens ein, vorzugsweise jedes im Bedienstandbodenbereich vorgesehene Bodenfenster in wenigstens einem Schwenkverbindungsbereich, vorzugsweise zwei Schwenkverbindungsbereichen, am Bedienstandbodenbereich schwenkbar getragen ist. Hierzu kann wenigstens ein, vorzugsweise jeder Schwenkverbindungsbereich ein Scharnier umfassen.

Um ein derartiges Bodenfenster leicht zwischen seiner Schließstellung und seiner Offenstellung verschwenken zu können, wird vorgeschlagen, dass wenigstens ein, vorzugsweise jedes im Bedienstandbodenbereich vorgesehene Bodenfenster um eine zu einer Bedienstand-Längsrichtung im Wesentlichen orthogonal stehende Schwenkachse schwenkbar ist.

An den Bedienstandbodenbereich kann wenigstens ein Bedienstandseitenwandbereich angrenzen. Um eine Kollision eines Bodenfensters beim Verschwenken in die Offenstellung mit einem derartigen Bedienstandseitenwandbereich zu vermeiden, wird vorgeschlagen, dass wenigstens ein, vorzugsweise jedes im Bedienstandbodenbereich vorgesehene Bodenfenster einen einem benachbarten Bedienstandseitenwandbereich näher liegenden Bodenfensterrandbereich und einen von dem benachbarten Bedienstandseitenwandbereich weiter entfernt liegenden Bodenfensterrandbereich aufweist, und dass wenigstens ein, vorzugsweise jedes im Bedienstandbodenbereich vorgesehene Bodenfenster im Bereich seines von dem benachbarten Bedienstandseitenwandbereich weiter entfernt liegenden Bodenfensterrandbereichs am Bedienstandbodenbereich schwenkbar getragen ist. Es ist darauf hinzuweisen, dass im Sinne der vorliegenden Erfindung derjenige Bedienstandseitenwandbereich, der zu einem jeweiligen Bodenfenster den geringsten Abstand aufweist, als der benachbarte Bedienstandseitenwandbereich betrachtet wird.

Um für ein derartiges Bodenfenster auch dann, wenn es nicht in seiner Schließstellung ist, definierte Positionierungen vorgeben zu können, wird vorgeschlagen, dass wenigstens ein, vorzugsweise jedes Bodenfenster in der Offenstellung oder/und wenigstens einer Zwischenstellung zwischen der Schließstellung und der Offenstellung arretierbar ist.

Beispielsweise kann wenigstens ein, vorzugsweise jedes Bodenfenster durch wenigstens ein selbsthemmendes Scharnier in der Offenstellung oder/und wenigstens einer Zwischenstellung arretierbar sein. Ein derartiges selbsthemmendes Scharnier ist ein derart schwergängig beschaffenes Scharnier, dass dieses zwar grundsätzlich eine Schwenkbewegung zulässt, aufgrund der darin definiert eingeführten Reibung jedoch dann, wenn keine externen Manipulationskräfte auf dieses bzw. ein dadurch schwenkbar getragenes Bodenfenster einwirken, in einer vorgegebenen Schwenkstellung verbleibt.

Alternativ kann vorgesehen sein, dass wenigstens ein, vorzugsweise jedes Bodenfenster durch am Bodenfenster und am Bedienstandbodenbereich festgelegte Haltemittel, vorzugsweise Haltekette, Halteseil oder Haltegestänge, in der Offenstellung oder/und wenigstens einer Zwischenstellung arretierbar ist. Derartige Haltegestänge werden beispielsweise auch bei Kippfenstern eingesetzt und können einen in einer Führungsnut einer an einem feststehenden Rahmen angebrachten Strebe geführten und am Fenster festgelegten Führungsbolzen aufweisen. Auch faltbare bzw. teleskopierbare Haltegestänge können eingesetzt werden.

Um insbesondere in der Schließstellung eines Bodenfensters den Innenraum des Bedienstandes von außen her nicht zugänglich zu halten, wird vorgeschlagen, dass Fixiermittel zum Fixieren wenigstens eines, vorzugsweise jedes Bodenfensters in der Schließstellung bezüglich des Bedienstandbodenbereichs vorgesehen sind.

Die Erfindung betrifft ferner eine Bodenbearbeitungsmaschine, insbesondere Bodenverdichter, umfassend einen erfindungsgemäß aufgebauten Bedienstand.

Nachfolgend wird die vorliegende Erfindung mit Bezug auf die beiliegenden Figuren detailliert beschrieben. Es zeigt:
- Fig. 1: eine als Bodenverdichter ausgeführte Bodenbearbeitungsmaschine in Seitenansicht;
- Fig. 2: eine Bodenbaugruppe mit einem Bedienstandbodenbereich eines Bedienstandes der Bodenbearbeitungsmaschine der Fig. 1 mit zwei im Bedienstandbodenbereich vorgesehenen Bodenfenstern teilweise in Explosionsdarstellung.

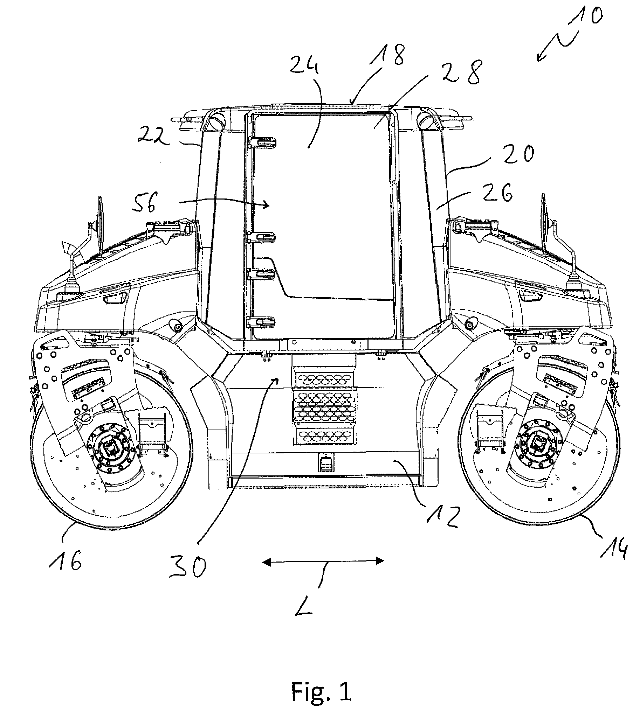

In Fig. 1 ist eine Bodenbearbeitungsmaschine in Form eines selbstfahrenden Bodenverdichters 10 in Seitenansicht dargestellt. Der Bodenverdichter 10 umfasst einen allgemein mit 12 bezeichneten Maschinenrahmen, an welchem an beiden in einer Verdichter-Längsrichtung L gelegenen Endbereichen jeweils eine Verdichterwalze 14 bzw. 16 um eine näherungsweise vertikale Schwenkachse schwenkbar getragen ist. Der Bodenverdichter 10 ist in der Verdichter-Längsrichtung L im Wesentlichen symmetrisch aufgebaut, so dass mit einem derartigen Bodenverdichter 10 in beiden Arbeitsrichtungen gleichartig gearbeitet werden kann.

Am Maschinenrahmen 12 ist ein allgemein mit 18 bezeichneter Bedienstand vorgesehen. Der allgemein auch als Kabine bzw. als geschlossener Bedienstand zu bezeichnende Bedienstand 18 weist zwei in der Verdichter-Längsrichtung L orientierte Bedienstandseitenwandbereiche 20, 22 auf, die auch als vordere bzw. hintere Bedienstandseitenwandbereiche bezeichnet werden können. Der Bedienstand 18 weist ferner zwei im Wesentlichen quer zur Verdichter-Längsrichtung L orientierte Bedienstandseitenwandbereiche auf, von welchen in Fig. 1 nur der Bedienstandseitenwandbereich 24 zu sehen ist und die als seitliche Bedienstandseitenwandbereiche bezeichnet werden können. Die Bedienstandseitenwandbereiche 20, 22, 24 erstrecken sich im Wesentlichen vertikal. Um einer im Bedienstand 18 Platz findenden Bedienperson eine möglichst ungestörte Sicht nach allen Seiten zu geben, sind vorzugsweise in allen Bedienstandseitenwandbereichen 20, 22, 24 Fenster 26 bzw. Türen 28 aus Glas oder dergleichen vorgesehen.

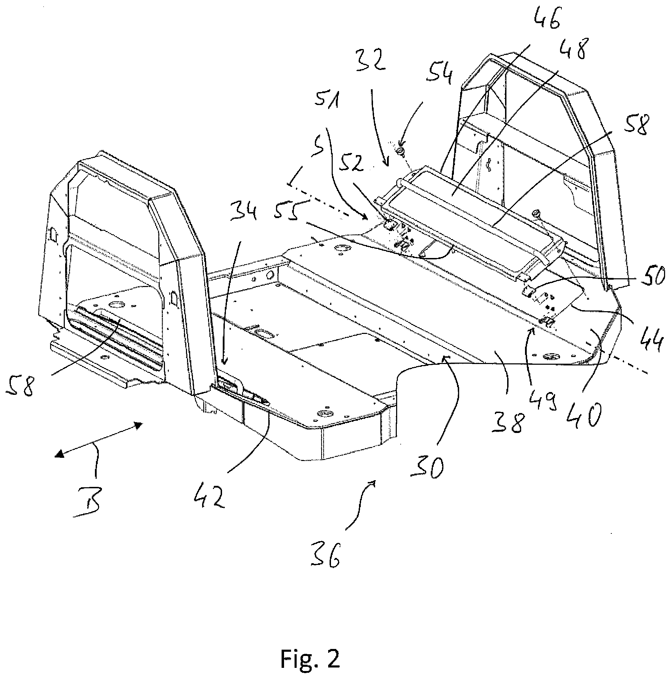

Um einer im Bedienstand 18 Platz findenden Bedienperson eine verbesserte Sicht auf den bearbeiteten Untergrund und insbesondere auch auf die Verdichterwalzen 14, 16 zu geben, sind, wie nachfolgend mit Bezug auf die Fig. 2 erläutert, in einem Bedienstandbodenbereich 30 im dargestellten Ausgestaltungsbeispiel zwei zueinander vorzugsweise identisch gestaltete Bodenfenster 32, 34 vorgesehen. Dabei zeigt die Fig. 2 eine Bedienstand-Bodenbaugruppe 36, welche im Wesentlichen auch den Bedienstandbodenbereich 30 bereitstellt. Dabei weist der Bedienstandbodenbereich 30 einen in der Verdichter-Längsrichtung L bzw. auch einer Bedienstand-Längsrichtung B im Wesentlichen zentral positionierten ersten Bodenbereichsabschnitt 38 auf, welcher im Wesentlichen horizontal orientiert ist, also eine im Wesentlichen horizontale Aufstandsfläche bzw. eine Basis dafür bereitstellt, und zur Aufnahme beispielsweise eines Sitzes für eine Bedienperson gestaltet ist. In der Bedienstand-Längsrichtung B schließen an den ersten Bodenbereichsabschnitt 38 zwei zweite Bodenbereichsabschnitte 40, 42 an. Diese auch den beiden in der Verdichter-Längsrichtung L gelegenen Endbereichen des Bodenverdichters 10 zugewandten zweiten Bodenbereichsabschnitte 40, 42 sind bezüglich des ersten Bodenbereichsabschnitts 38 bzw. bezüglich der an diesem bereitgestellten, im Wesentlichen horizontalen Aufstandsfläche angewinkelt und verlaufen ausgehend von ihrem an den ersten Bodenbereichsabschnitt 38 angrenzenden Bereich vom ersten Bodenbereichsabschnitt 38 weg schräg nach oben. Ein Neigungswinkel der zweiten Bodenbereichsabschnitte 40, 42 bezüglich einer horizontalen Ebene bzw. des ersten Bodenbereichsabschnitts 38 ist im allgemeinen kleiner als 60°, vorzugsweise kleiner als 50°, und kann beispielsweise im Bereich von etwa 45° liegen. Es ist mit Bezug auf die Fig. 2 darauf hinzuweisen, dass selbstverständlich am ersten Bodenbereichsabschnitt 38 der Bedienstand-Bodenbaugruppe 36 eine diesen überdeckende und dann die gleichermaßen horizontale Aufstandsfläche bereitstellende Bodenplatte oder ein sonstiger Bodenbelag vorgesehen sein kann

In jedem dieser zweiten Bodenbereichsabschnitte 40, 42 ist eines der beiden Bodenfenster 32, 34 vorgesehen. Wie in Verbindung mit dem Bodenfenster 32 zu erkennen, ist dazu im Bedienstandbodenbereich 38 bzw. im jeweiligen zweiten Bodenbereichsabschnitt 40 bzw. 42 eine Fensteröffnung 44 vorgesehen. Diese kann in Anpassung an die Form des jeweiligen Bodenfensters 40, 42 quer zur Bedienstand-Längsrichtung B langgestreckt sein und eine näherungsweise rechteckige Öffnungskontur aufweisen.

Wie ebenfalls anhand des Bodenfensters 32 zu erkennen, weist jedes der Bodenfenster 32, 34 einen Fensterrahmen 46 auf, an welchem eine mit Glas oder dergleichen aufgebaute Fensterscheibe 48 fest getragen ist. In einem dem ersten Bodenbereichsabschnitt 38 näher gelegenen und somit von einem angrenzend an den jeweiligen zweiten Bodenbereichsabschnitt 40, 42 vorgesehenen Bedienstandseitenwandungsbereich 20 bzw. 22 weiter entfernt liegenden Bodenfensterrandbereich 55 sind die Bodenfenster 32, 34 durch zwei jeweilige Schwenkverbindungsbereiche 49, 51 bereitstellende Scharniere 50, 52 am Bedienstandbodenbereich 30 um eine zur Bedienstand-Längsrichtung B im Wesentlichen orthogonal stehende Schwenkachse S schwenkbar getragen. Der Fensterrahmen 46 ist dabei so beschaffen, dass er bei in einer Schließstellung positioniertem Bodenfenster 32, 34 auf einer eine jeweilige Fensteröffnung 44 umgebenden und einem Innenraum 56 des Bedienstandes 18 zugewandten Oberfläche des Bedienstandbodenbereichs 30 aufliegt. Durch beispielsweise als Schraubbolzen oder dergleichen ausgebildete Fixiermittel 54 kann ein jeweiliges Bodenfenster 32, 34 am Bedienstandbodenbereich 30 vom Innenraum 56 her gegen Verschwenkung fixiert werden.

An jedem der Bodenfenster 32, 34 ist eine Stütze 58 vorgesehen. Diese bügelartig ausgebildete Stützen 58 überbrücken das jeweilige Bodenfenster 32, 34 quer zur Bedienstand-Längsrichtung B im Wesentlichen vollständig und sind an den in Richtung der Schwenkachse S gelegenen Endbereichen des Fensterrahmens 46 festgelegt. Somit kann bei in seiner Schließstellung positioniertem Bodenfenster 32, 34 eine Bedienperson ihre Füße auch im Bereich der zweiten Bodenbereichsabschnitte 40, 42 abstellen, ohne dass die Gefahr einer übermäßigen Belastung der Fensterscheiben 48 der Bodenfenster 32, 34 entsteht. Zum Verschwenken eines jeweiligen Bodenfensters 32, 34 kann an einer derartigen Stütze 58 angegriffen werden, so dass diese auch als Handgriff genutzt werden kann.

Im Arbeitsbetrieb des Bodenverdichters 10 können die Bodenfenster 32, 34 in ihrer Schließstellung positioniert sein, in welcher der jeweilige Fensterrahmen 46 auf dem Bedienstandbodenbereich 30 oder einem am Bedienstandbodenbereich angebrachten, feststehenden Bodenfensterrahmen aufliegt und die Bodenfenster 32, 34 durch die Fixiermittel 54 fixiert sind. Somit ist der Innenraum 56 gegen das Eindringen von Feuchtigkeit oder Verunreinigungen geschützt. Sollen die Bodenfenster 32, 34 an ihrer Außenseite gereinigt werden, können diese aus der Schließstellung heraus zum Innenraum 56 hin in eine Offenstellung verschwenkt werden, in welcher beispielsweise die jeweilige Stütze 58 auf dem Bedienstandbodenbereich 30 aufsteht. Nach dem Reinigen der Bodenfenster 32, 34 können diese wieder in ihre Schließstellung verschwenkt und am Bedienstandbodenbereich 30 fixiert werden.

Um die Möglichkeit zu schaffen, die Bodenfenster 32, 34 in anderen Stellung zu arretieren, können beispielsweise die Scharniere 50, 52 selbsthemmend ausgebildet sein. D.h., die in den Scharnieren selbst generierte Reibung ist so dimensioniert, dass ein jeweiliges Bodenfenster 32, 34 nur durch externe Krafteinwirkung aus seiner momentan jeweils eingenommenen Schwenkpositionierung heraus bewegt werden kann. Auch andere Haltemittel, wie zum Beispiel eine Haltekette, ein Halteseil bzw. Haltekabel oder ein Haltegestänge, welche zwischen dem Bedienstandbodenbereich 30 und dem jeweiligen Fensterrahmen 46 wirken können und eine Verschwenkung des jeweiligen Bodenfensters 32, 34 nur bis zu einem durch derartige Haltemittel definierten maximalen Schwenkwinkel zulassen, können eingesetzt werden.

Bei einem erfindungsgemäß aufgebauten Bedienstand bzw. einer damit ausgestatteten Bodenbearbeitungsmaschine besteht durch das Vorsehen derartiger Bodenfenster die Möglichkeit, einer Bedienperson freie Sicht auch auf den unmittelbar im Bereich der Maschine liegenden Boden zu geben. Aufgrund der Verschwenkbarkeit eines derartigen Bodenfensters besteht auch die Möglichkeit, dieses an seiner Außenseite, die bei in der Schließstellung positioniertem Bodenfenster nur schwer bzw. nicht zugänglich ist, zu reinigen. Dabei ist es von besonderem Vorteil, dass ein derartiges Bodenfenster aus seiner Schließstellung heraus in Richtung zum Innenraum des Bedienstandes verschwenkt wird, so dass es bei Positionierung in der Offenstellung oder einer Zwischenstellung auch vom Bedienstand aus gereinigt werden kann bzw. vom Bedienstand aus Zugriff auf die Außenseite des Bodenfensters besteht.

Es ist selbstverständlich, dass derartige Bodenfenster auch in anderen Positionierungen an einem Bedienstandbodenbereich vorgesehen sein können, beispielsweise auch in dem im Wesentlichen horizontal orientierten ersten Bodenbereichsabschnitt. Auch können derartige Bodenfenster andere Formen aufweisen.

## Patentansprüche

1. Bedienstand für eine Bodenbearbeitungsmaschine, wie zum Beispiel Bodenverdichter, umfassend einen Bedienstandbodenbereich (30) und wenigstens ein im Bedienstandbodenbereich (30) vorgesehenes Bodenfenster (32, 34), wobei das Bodenfenster (32, 34) am Bedienstandbodenbereich (30) zwischen einer Offenstellung und einer Schließstellung schwenkbar getragen ist, wobei der Bedienstandbodenbereich (30) einen im Wesentlichen horizontalen ersten Bodenbereichsabschnitt (38) und wenigstens einen an den im Wesentlichen horizontalen ersten Bodenbereichsabschnitt (38) angrenzenden und bezüglich des im Wesentlichen horizontalen ersten Bodenbereichsabschnitts (38) angewinkelten zweiten Bodenbereichsabschnitt (40, 42) aufweist, **dadurch gekennzeichnet,**
- **dass** in wenigstens einem zweiten Bodenbereichsabschnitt (40, 42) wenigstens ein Bodenfenster (32, 34) vorgesehen ist,
- **dass** an wenigstens einem in einem zweiten Bodenbereichsabschnitt (40, 42) vorgesehenen Bodenfenster (32, 34) eine das Bodenfenster wenigstens teilweise überbrückende Stütze (58) vorgesehen ist.

2. Bedienstand nach Anspruch 1,
**dadurch gekennzeichnet, dass** wenigstens ein, vorzugsweise jedes im Bedienstandbodenbereich (30) vorgesehene Bodenfenster (32, 34) von der Schließstellung zur Offenstellung in Richtung zu einem Bedienstandinnenraum (56) hin verschwenkbar ist.

3. Bedienstand nach Anspruch 1 oder 2,
**dadurch gekennzeichnet, dass** wenigstens ein, vorzugsweise jedes im Bedienstandbodenbereich (30) vorgesehene Bodenfenster (32, 34) in wenigstens einem Schwenkverbindungsbereich (49, 51), vorzugsweise zwei Schwenkverbindungsbereichen (49, 51), am Bedienstandbodenbereich (30) schwenkbar getragen ist.

4. Bedienstand nach Anspruch 3,
**dadurch gekennzeichnet, dass** wenigstens ein, vorzugsweise jeder Schwenkverbindungsbereich (49, 51) ein Scharnier (50,52) umfasst.

5. Bedienstand nach einem der vorangehenden Ansprüche,
**dadurch gekennzeichnet, dass** wenigstens ein, vorzugsweise jedes im Bedienstandbodenbereich (30) vorgesehene Bodenfenster (32, 34) um eine zu einer Bedienstand-Längsrichtung (B) im Wesentlichen orthogonal stehende Schwenkachse (S) schwenkbar ist.

6. Bedienstand nach einem der vorangehenden Ansprüche,
**dadurch gekennzeichnet, dass** an den Bedienstandbodenbereich (30) wenigstens ein Bedienstandseitenwandbereich (20, 22) angrenzt, und dass wenigstens ein, vorzugsweise jedes im Bedienstandbodenbereich (30) vorgesehene Bodenfenster (32, 34) einen einem benachbarten Bedienstandseitenwandbereich (20, 22) näher liegenden Bodenfensterrandbereich und einen von dem benachbarten Bedienstandseitenwandbereich (20, 22) weiter entfernt liegenden Bodenfensterrandbereich (55) aufweist, und dass wenigstens ein, vorzugsweise jedes im Bedienstandbodenbereich (30) vorgesehene Bodenfenster (32, 34) im Bereich seines von dem benachbarten Bedienstandseitenwandbereich (20, 22) weiter entfernt liegenden Bodenfensterrandbereichs (55) am Bedienstandbodenbereich (30) schwenkbar getragen ist.

7. Bedienstand nach einem der vorangehenden Ansprüche,
**dadurch gekennzeichnet, dass** der Bedienstandbodenbereich (30) einen im Wesentlichen horizontalen ersten Bodenbereichsabschnitt (38) und zwei an den im Wesentlichen horizontalen ersten Bodenbereichsabschnitt (38) angrenzende und bezüglich des im Wesentlichen horizontalen ersten Bodenbereichsabschnitts (38) angewinkelte zweite Bodenbereichsabschnitte (40, 42) aufweist, und dass in beiden an einander entgegengesetzten Endbereichen des ersten Bodenbereichsabschnitts (38) an diesen angrenzenden zweiten Bodenbereichsabschnitten (40, 42) wenigstens ein Bodenfenster (32, 34) vorgesehen ist.

8. Bedienstand nach einem der vorangehenden Ansprüche,
**dadurch gekennzeichnet, dass** wenigstens ein, vorzugsweise jedes Bodenfenster (32, 34) in der Offenstellung oder/und wenigstens einer Zwischenstellung zwischen der Schließstellung und der Offenstellung arretierbar ist.

9. Bedienstand nach Anspruch 4 und Anspruch 8,
**dadurch gekennzeichnet, dass** das wenigstens ein, vorzugsweise jedes Bodenfenster (32, 34) durch wenigstens ein selbsthemmendes Scharnier (50, 52) in der Offenstellung oder/und wenigstens einer Zwischenstellung arretierbar ist.

10. Bedienstand nach Anspruch 8,
**dadurch gekennzeichnet, dass** wenigstens ein, vorzugsweise jedes Bodenfenster (32, 34) durch am Bodenfenster (32, 34) und am Bedienstandbodenbereich (30) festgelegte Haltemittel, vorzugsweise Haltekette, Halteseil oder Haltegestänge, in der Offenstellung oder/und wenigstens einer Zwischenstellung arretierbar ist

11. Bedienstand nach einem der vorangehenden Ansprüche,
**dadurch gekennzeichnet, dass** Fixiermittel (54) zum Fixieren wenigstens eines, vorzugsweise jedes Bodenfenster (32, 34) in der Schließstellung bezüglich des Bedienstandbodenbereichs (30) vorgesehen sind.

12. Bedienstand nach einem der vorangehenden Ansprüche,
**dadurch gekennzeichnet, dass** an jedem Bodenfenster (32, 34) eine das Bodenfenster wenigstens teilweise, vorzugweise vollständig überbrückende Stütze (58) vorgesehen ist.

13. Bodenbearbeitungsmaschine, insbesondere Bodenverdichter, umfassend einen Bedienstand (18) nach einem der vorangehenden Ansprüche.

## Claims

1. Control station for a soil-processing machine, such as, for example, a soil compactor, comprising a control station floor region (30) and at least one floor window (32, 34) provided in the control station floor region (30), wherein the floor window (32, 34) in the control station floor region (30) is supported so that it can swivel between an open position and a closed position,
wherein
the control station floor region (30) exhibits an essentially horizontal first floor region section (38) and at least one second floor region section (40, 42) adjacent to the essentially horizontal first floor region section (38) and angled in relation to the essentially horizontal first floor region section (38),
**characterized in that**
- in at least one second floor region section (40, 42) at least one floor window (32, 24) is provided,
- and that a support (58) that at least partially bridges the floor window is provided at at least one floor window (32, 34) provided in a second floor region section (40, 42).

2. Control station according to claim 1,
**characterised in that** at least one, preferably every floor window (32, 34) provided in the control station floor region (30) can be swivelled from the closed position to the open position in the direction towards a control station interior (56).

3. Control station according to claim 1 or 2,
**characterised in that** at least one, preferably, every floor window (32, 34) provided in the control station floor region (30) is supported so that it can swivel in at least one swivel connection region (49, 51), preferably two swivel connection regions (49, 51), on the control station floor region (30).

4. Control station according to claim 3,
**characterised in that** at least one, preferably every, swivel connection region (49, 51) comprises a hinge (50, 52).

5. Control station according to any one of the preceding claims,
**characterised in that** at least one, preferably every, floor window (32, 34) provided in the control station floor region (30) is able to be swivelled about a swivel axis (S) situated essentially orthogonal to the control station longitudinal direction (B).

6. Control station according to any one of the preceding claims,
**characterised in that** at least one control station side wall region (20, 22) is adjacent to the control station floor region (30) and that at least one, preferably every floor window (32, 34) provided in the control station floor region (30) exhibits a floor window edge region located closer to an adjacent control station side wall region (20, 22) and a floor window edge region (55) located further away from the adjacent control station side wall region (20, 22), and that at least one, preferably every floor window (32, 34) provided in the control station floor region (30) is supported on the control station floor region (30) so that it can swivel in the region of its floor window edge region (55) located further away from the adjacent control station side wall region (20, 22).

7. Control station according to any one of the preceding claims,
**characterised in that** the control station floor region (30) exhibits an essentially horizontal first floor region section (38) and two second floor region sections (40, 42) adjacent to the essentially horizontal first floor region section (38) and angled in relation to the essentially horizontal first floor region section (38), and that at least one floor window (32, 34) is provided in both second floor region sections (40, 42) adjacent to the first floor region section (38) in mutually opposite end regions of the first floor region section (38).

8. Control station according to any one of the preceding claims,
**characterised in that** at least one, preferably every, floor window (32, 34) can be stopped in the open position or/and at least one intermediate position between the closed position and the open position.

9. Control station according to claim 4 and 8,
**characterised in that** at least one, preferably every floor window (32, 34) can be stopped by at least one self-locking hinge (50, 52) in the open position or/and at least one intermediate position.

10. Control station according to claim 8,
**characterised in that** at least one, preferably every, floor window (32, 34) can be stopped by holding means fastened to the floor window (32, 34) and to the control station floor region (30), preferably a holding chain, holding rope or holding rod, in the open position or/and at least one intermediate position.

11. Control station according to any one of the preceding claims,
**characterised in that** fastening means (54) for fastening at least one, preferably every, floor window (32, 34) are provided in the closed position in relation the control station floor region (30).

12. Control station according to any one of the preceding claims,
**characterised in that** a support (58) that at least partially, preferably entirely, bridges the floor window is provided at every floor window (32, 34).

13. Soil-processing machine, particularly a soil compactor comprising a control station (18) according to any one of the preceding claims.

## Revendications

1. Poste de commande pour une machine de traitement du sol, comme par exemple un compacteur de sol, comprenant une zone de fond de poste de commande (30) et au moins une fenêtre de fond (32, 34) prévue dans la zone de fond de poste de commande (30), dans lequel la fenêtre de fond (32, 34) dans la zone de fond de poste de commande (30) est supportée de manière à pouvoir pivoter entre une position ouverte et une position fermée,
dans lequel
la zone de fond de poste de commande (30) présente une première section de zone de fond essentiellement horizontale (38) et au moins une deuxième section de zone de fond (40, 42) adjacente à la première section de zone de fond essentiellement horizontale (38) et inclinée par rapport à la première section de zone de fond essentiellement horizontale (38),
**caractérisé en ce que**
- dans au moins une deuxième section de zone de fond (40, 42), au moins une fenêtre de fond (32, 24) est prévue,
- et **en ce qu'**un support (58) qui recouvre au moins partiellement la fenêtre de fond est prévu au niveau d'au moins une fenêtre de fond (32, 34) prévue dans une deuxième section de zone de fond (40, 42).

2. Poste de commande selon la revendication 1,
**caractérisé en ce qu'au** moins une, de préférence chaque fenêtre de fond (32, 34) prévue dans la zone de fond de poste de commande (30) peut pivoter de la position fermée à la position ouverte en direction d'un intérieur de poste de commande (56).

3. Poste de commande selon la revendication 1 ou 2,
**caractérisé en ce qu'au** moins une, de préférence chaque fenêtre de fond (32, 34) prévue dans la zone de fond de poste de commande (30) est supportée de manière à pouvoir pivoter dans au moins une zone de liaison pivotante (49, 51), de préférence deux zones de liaison pivotantes (49, 51), sur la zone de fond de poste de commande (30).

4. Poste de commande selon la revendication 3,
**caractérisé en ce qu'au** moins une, de préférence chaque, zone de connexion pivotante (49, 51) comprend une charnière (50, 52).

5. Poste de commande selon l'une quelconque des revendications précédentes, **caractérisé en ce qu'au** moins une, de préférence chaque, fenêtre de fond (32, 34) prévue dans la zone de fond de poste de commande (30) peut pivoter autour d'un axe de pivotement (S) situé sensiblement orthogonal à la direction longitudinale de poste de commande (B).

6. Poste de commande selon l'une quelconque des revendications précédentes, **caractérisé en ce qu'au** moins une zone de paroi latérale de poste de commande (20, 22) est adjacente à la zone de fond de poste de commande (30) et qu'au moins une, de préférence chaque fenêtre de fond (32, 34) prévue dans la zone de fond de poste de commande (30) présente une zone de bord de fenêtre de fond située plus près d'une zone de paroi latérale de poste de commande adjacente (20, 22) et une zone de bord de fenêtre de fond (55) située plus loin de la zone de paroi latérale de poste de commande adjacente (20, 22), et **en ce qu'**au moins une, de préférence chaque fenêtre de fond (32, 34) prévue dans la zone de fond de poste de commande (30) est supportée sur la zone de fond de poste de commande (30) de sorte qu'elle puisse pivoter dans la région de sa zone de bord de fenêtre de fond (55) située plus loin de la zone de paroi latérale de poste de commande adjacente (20, 22).

7. Poste de commande selon l'une quelconque des revendications précédentes, **caractérisé en ce que** la zone de fond de poste de commande (30) présente une première section de zone de fond (38) essentiellement horizontale et deux deuxièmes sections de zone de fond (40, 42) adjacentes à la première section de zone de fond (38) essentiellement horizontale et inclinées par rapport à la première section de zone de fond (38) essentiellement horizontale, et **en ce qu'**au moins une fenêtre de fond (32, 34) est prévue dans les deux deuxièmes sections de zone de fond (40, 42) adjacentes à la première section de zone de fond (38) dans des zones d'extrémité mutuellement opposées de la première section de zone de fond (38).

8. Poste de commande selon l'une quelconque des revendications précédentes, **caractérisé en ce qu'au** moins une, de préférence chaque fenêtre de fond (32, 34) peut être arrêtée dans la position ouverte ou/et dans au moins une position intermédiaire entre la position fermée et la position ouverte.

9. Poste de commande selon la revendication 4 et 8,
**caractérisé en ce qu'au** moins une, de préférence chaque fenêtre de fond (32, 34) peut être arrêtée par au moins une charnière autobloquante (50, 52) dans la position ouverte ou/et dans au moins une position intermédiaire.

10. Poste de commande selon la revendication 8,
**caractérisé en ce qu'au** moins une, de préférence chaque fenêtre de fond (32, 34) peut être arrêtée par des moyens de retenue fixés à la fenêtre de fond (32, 34) et à la zone de fond de poste de commande (30), de préférence une chaîne de retenue, un câble de retenue ou une tige de retenue, dans la position ouverte ou/et dans au moins une position intermédiaire.

11. Poste de commande selon l'une quelconque des revendications précédentes, **caractérisé en ce que** des moyens de fixation (54) pour fixer au moins une, de préférence chaque fenêtre de fond (32, 34) sont prévus dans la position fermée par rapport à la zone de fond de poste de commande (30).

12. Poste de commande selon l'une quelconque des revendications précédentes, **caractérisé en ce qu'**un support (58) qui recouvre au moins partiellement, de préférence entièrement, la fenêtre de fond est prévu au niveau de chaque fenêtre de fond (32, 34).

13. Machine de traitement du sol, notamment compacteur de sol, comprenant un poste de commande (18) selon l'une quelconque des revendications précédentes.
